# EUROPÄISCHE PATENTSCHRIFT

(11) **EP 1 225 451 B1**
(45) Veröffentlichungstag und Bekanntmachung des Hinweises auf die Patenterteilung: **06.08.2008**
(21) Anmeldenummer: 02000947.8
(22) Anmeldetag: 16.01.2002
(51) Int. Cl.: G01P 15/12, G01L 5/00, G01L 1/22, G01P 3/44

(54) **Messanordnung im Radlager eines Kraftfahrzeugs zur Detektierung von Kräften und Momenten**
Measuring arrangement in the wheel bearing of motor vehicles for detecting forces and moments
Dispositif de mesure dans le roulement de roue d'un véhicule à moteur pour déterminer des forces et des moments

(30) Priorität: 20.01.2001 DE 10102650
(43) Veröffentlichungstag der Anmeldung: 24.07.2002
(73) Patentinhaber: ROBERT BOSCH GMBH, 70442 Stuttgart (DE)
(72) Erfinder: Dukart, Anton, 70839 Gerlingen (DE); Arndt, Dietmar, Dr., 71706 Markgroeningen (DE)

(56) Entgegenhaltungen:
- DE-A- 19 548 759
- DE-A- 19 627 385
- DE-A- 19 703 832
- US-A- 5 140 849
- US-A- 6 002 248

## Beschreibung

### Stand der Technik

Die Erfindung betrifft eine Messanordnung in einem Radlager eines Kraftfahrzeugs zur Detektierung physikalischer Größen mittels an oder in mindestens einer der Lagerschalen angeordneten dehnungsempfindlichen Sensoren.

Eine derartige Messanordnung ist beispielsweise aus EP-0-929-707 A1 bekannt, bei der ein Drehzahlsensor innerhalb eines Kugelwälzlagers angeordnet ist. Kugelwälzlager bieten einen sehr vorteilhaften geschützten Einbauraum für entsprechende Sensoren. Durch eine Integration der Sensorik in das Kugellager entsteht außerdem eine erhebliche System-und Montagevereinfachung.

Die Robert Bosch GmbH untersucht seit einiger Zeit den Kraffluss in Radlagern von Kraftfahrzeugen. Ziel dieser Studien ist die Messung der Kräfte und Momente, die von der Straße über das Rad und über das Radlager auf das Fahrwerk übertragen werden. Die Kraftbestimmung gründet auf den elastischen Verformungen des Lagers aufgrund der externen Kräfte- und Momenteneinwirkungen.

Im Rahmen dieser Arbeiten fand man heraus, dass mittels Dehnungsmessstreifen auf der Radlagerschale die Position der einzelnen Kugeln bestimmt werden kann. Der Widerstandswert der Dehnungsmessstreifen ist an die lokale mechanische Spannung in dem Substrat der Dehnungsmessstreifen gekoppelt. Diese lokale Spannung variiert mit der Position der einzelnen Kugeln im Lager. Auch im Falle einer konstanten Kraft oder eines konstanten Momentes ist das Spannungssignal am Dehnungsmessstreifen mit einer sinusförmigen Signalmodulation überlagert.

Aus der DE 19627385 A1 ist eine Radmessnabe mit einem Messwertaufnehmer bekannt, der ein äußeres und ein inneres Ringteil umfasst, wobei an dessen äußerem Ringteil eine Felge anordenbar ist und an dessen innerem Ringteil ein Radflansch anordenbar ist, und beide Ringteile über radial verlaufende Messstege miteinander verbunden sind, an denen Dehnmessstreifen zur Bestimmung von zu messenden Kräften und Momenten angeordnet sind.

Die noch unveröffentliche DE 100 41 093.6 (Anmeldetag 22. August 2000) der Anmelderin beschreibt, dass mittels der ermittelten Kugelgeschwindigkeit und der am Lager angreifenden Kräfte und Momente auch die Raddrehzahl messbar ist. Bei dieser Messanordnung sind jeweils zwei Dehnungsmessstreifen zu einer Messeinheit zusammengefasst, wobei der Abstand der beiden Dehnungsmessstreifen etwa dem halben Kugelabstand im Lager entspricht. Dadurch tritt zwischen den an den einzelnen Dehnungsmessstreifen eines Paars erfassten Spannungssignalen eine Phasenverschiebung von etwa 180° auf. Durch die Beobachtung des Gesamtwiderstands der Dehnungsmessstreifeneinheit kann auf die auf das Lager einwirkende Kraft geschlossen werden. Über das Modulationssignal, das geeigneterweise zwischen den beiden Dehnungsmessstreifen abgegriffen wird, kann auf die Kugelgeschwindigkeit und somit auf die Raddrehzahl geschlossen werden.

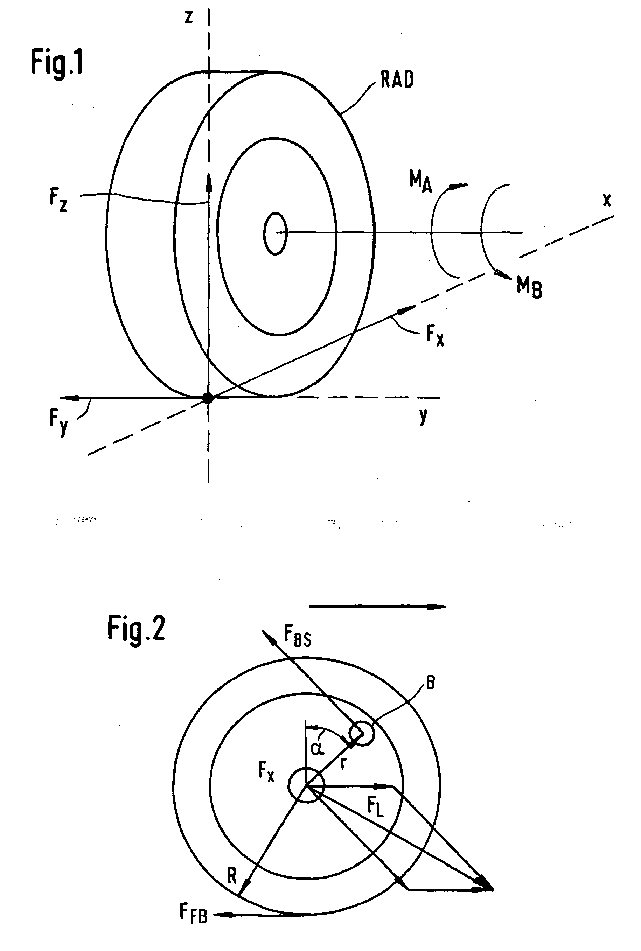

In der beiliegenden Figur 1 sind schematisch die wesentlichen auf ein Rad eines Kraftfahrzeugs einwirkenden Kräfte und Momente bezogen auf ein x,y,z-Koordinatensystem, dessen Nullpunkt sich am Aufstandspunkt des Rades befindet, eingezeichnet. Es sind dies die Radaufstandskraft (Fz), die Brems- und Beschleunigungskräfte (Fx) in Fahrtrichtung x, die Seitenführungskraft (Fy) und die Beschleunigungs- und Bremsmomente (M_{A} und M_{B}).

Die beiliegende Figur 2 zeigt mit Vektorpfeilen, dass sich die im Bremsfall vom Bremssattel bzw.dem Bremsbelag B auf die Bremsscheibe übertragene Kraft F_{BS} in Form eines Kraftnebenschlusses zu den sonstigen drei Radkräften überlagert, so dass sich die resultierende Radlagerkraft Fl als Vektorsumme der von der Fahrbahn auf das Rad übertragenen Kraft F_{FB} und der Bremskraft F_{BS} ergibt. Die sich den zu messenden Kräften überlagernde Bremskraft kann nur dann eindeutig bestimmt werden, wenn der Krafteinwirkungspunkt der Bremsbeläge B in Radius r und Winkel α zur Achse hin bekannt ist. Dieser Radius r und der Winkel α können jedoch in Abhängigkeit vom Betriebsfall und auch vom Verschleiß der Bremsbeläge B stark variieren.

### Aufgabe und Vorteile der Erfindung

Es ist Aufgabe der Erfindung, eine gattungsgemäße Messanordnung so anzugeben, dass keine genaue Kenntnis des Krafteinleitpunktes der Bremskraft und deren Winkellage notwendig ist, um die Radkräfte und Radmomente bestimmen zu können und dass außerdem eine genaue Bremsmomentinformation von der Messanordnung erfassbar ist.

Die Aufgabe wird anspruchsgemäß gelöst.

Gemäß einem wesentlichen Aspekt der Erfindung werden die auf das Radlager einwirkenden Kräfte durch Dehnungsmessstreifen im oder am Innenring des Radlagers erfasst. Und zwar ist an dem sich mit dem Rad drehenden Innenring des Radlagers mindestens ein Dehnungsmessstreifenpaar befestigt, das aus zwei Dehnungsmessstreifen besteht, die in der Rotationsebene gesehen einen Winkel von 90° zueinander bilden, und diese beiden Dehnungsmessstreifen sind in einer Brückenschaltung so miteinander verbunden, dass ein Ausgangssignal der Brückenschaltung nur auf Torsionsmomente im sich drehenden Radlagerflansch und nicht auf Biegekraftkomponenten reagiert.

Die erfindungsgemäße Messanordnung gestattet deshalb außer der Erfassung der drei bekannten Kräfte, nämlich der Radaufstandskraft (Fz), der Brems- und Beschleunigungskräfte (Fx) und der Seitenführungskraft (Fy) auch die Erfassung des vom Bremssattel auf die Bremsscheibe übertragenen Bremsmoments.

Damit der Kraftfluss nicht direkt von der Felge des Rades über die Bremsscheibe verläuft, ist die Befestigung der Felge gegenüber der Befestigung der Bremsscheibe entweder axial oder radial versetzt (sog. mechanisches Offset-Konzept zwischen Felge und Bremsscheibe).

Statt einem einzigen Paar von Dehnungsmessstreifen in der erfindungsgemäßen Anordnung zu verwenden, können vorteilhafterweise mehrere, z.B. drei, gegeneinander jeweils um etwa 120° in Rotationsrichtung des Radlagers winkelversetzte Paare von Dehnungsmessstreifen vorgesehen sein.

Wenn, wie bevorzugt, in der erfindungsgemäßen Messanordnung mehrere Dehnungsmessstreifenpaare vorgesehen sind, lassen sich die durch die Bremskrafteinleitung enstehenden Modulationen bei der Messung der Kräfte Fx, Fy, Fz sowie der beiden Momente in einer nachgeschalteten Auswerteschaltung eliminieren.

Zur Signalübertragung zwischen den mit dem bewegten Radlagerring bewegten Dehnungsmessstreifenpaare ausgesendeten Ausgangssignale ist am bewegten Radlagerinnenring ein Telemetriesender und am feststehenden Außenring ein Telemetrieempfänger angeordnet, so dass die Signalübertragung auf das stehende Teil mit der Nah- der Fernfeldtelemetrie erfolgt.

Die erfindungsgemäße Messanordnung kann zusätzlich mit am feststehenden Außenring des Radlagers angebrachten Dehnungsmessstreifenpaaren versehen sein, die in Drehrichtung winkelversetzt sind. Mit derartigen Dehnungsmessstreifenpaaren lässt sich z. B. auch die Raddrehzahl und Drehrichtung ermitteln.

Die erfindungsgemäße Messanordnung hat insbesondere folgende Vorteile:
- es ist keine genaue Kenntnis des Krafteinleitpunktes der Bremskraft und deren Winkellage notwendig, um die Radkräfte und Radmomente bestimmen zu können;
- eine genaue Bremsmomentinformation kann gewonnen werden;
- die Wälzkörpermodulation ist im Kraftfluss des Innenrings wesentlich geringer als am Außenring;

Die nachstehende Beschreibung beschreibt ein bevorzugtes Ausführungsbeispiel der Erfindung an Hand der beiliegenden Zeichnungen.

### Zeichnung:

Figur 1 zeig schematisch an einem Rad eines Fahrzeugs angreifende Kräfte und Momente in einem rechtwinkligen x,y,z-Koordinatensystem.
Figur 2 zeigt in Form eines Vektordiagramms die sich zu den Radkräften vektoriell überlagernde Bremskraft, die von dem Bremsbelag auf die Bremsscheibe übertragen wird.
Figur 3A zeigt ein bevorzugtes Ausführungsbeispiel einer erfindungsgemäßen Messanordnung in einem schematischen Schnitt durch ein Radlager eines Kraftfahrzeugs.
Figur 3B zeigt die genauere Anordnung von drei Dehnungsmessstreifenpaaren DMS1, DMS2, DMS3 am rotierenden Innenring des Radlagers,und
Figur 4 zeigt ein Vektordiagramm, das das Gesamtgleichgewicht der im Radlager auftretenden und von der erfindungsgemäßen Messanordnung messbaren Radkräfte veranschaulicht.

### Ausführungsbeispiel

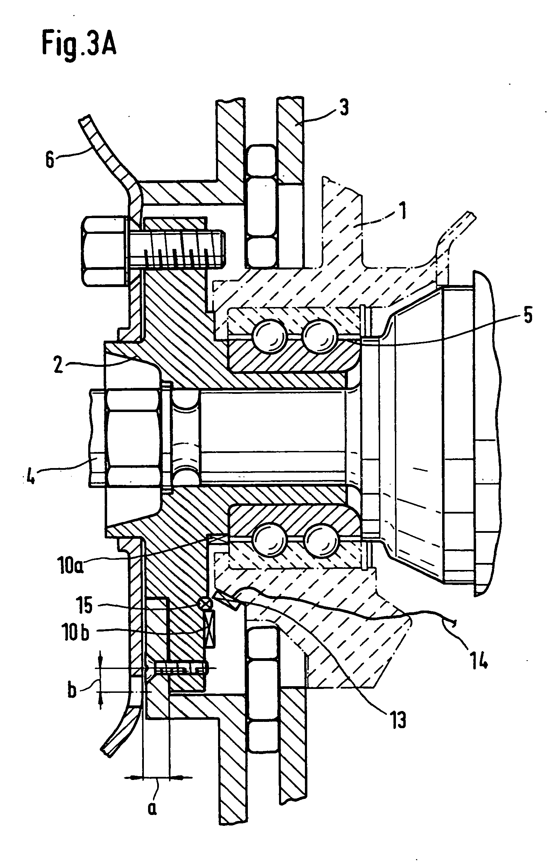

In Figur 3A, die schematisch eine Schnittansicht eines Radlagers eines Kraftfahrzeugs zeigt, rotieren die durch eine ausgezogene Schraffur hervorgehobenen Teile mit der abgebrochen dargestellten Antriebswelle 4 eines Rades. Diese Teile sind im wesentlichen ein Innenring 2 eines Wälz- oder Kugellagers 5, eine Bremsscheibe 3 und eine Radfelge 6. Mit am Innenring 2 befestigten Dehnungsmessstreifenpaaren 10a bzw. 10b werden durch einen Telemetriesender 15 Ausgangssignale von den Dehnungsmessstreifenpaaren 10a bzw. 10b zu einem an einem feststehenden Radlageraußenring 1 befestigten Telemetrieempfänger 13 übertragen. Der Telemetrieempfänger 13 ist durch eine Verbindungsleitung 14 mit einer (nicht dargestellten) Auswerteeinheit verbunden.

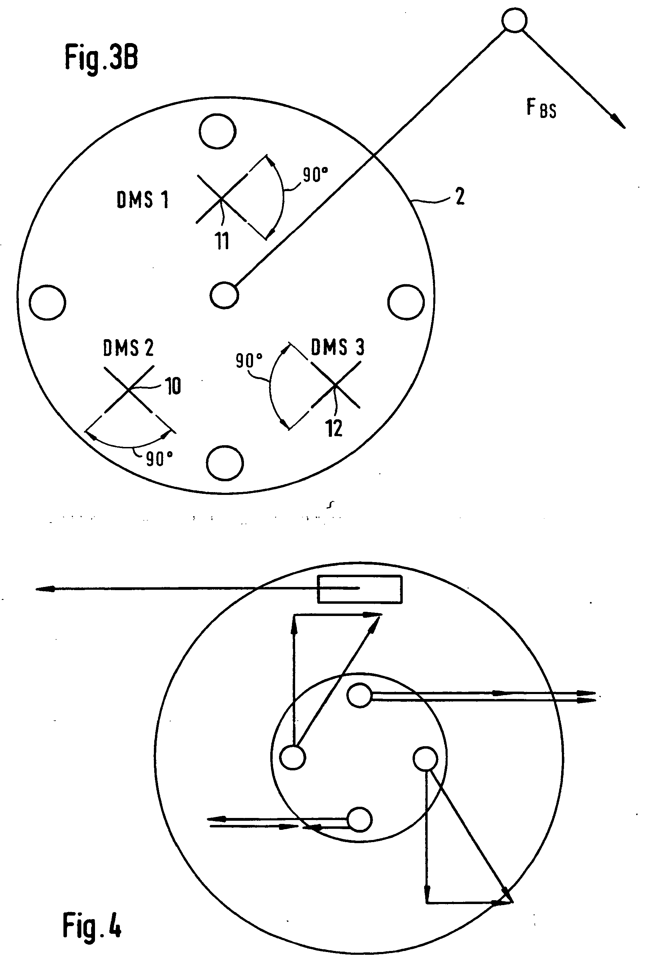

Figur 3b, die eine schematische Ansicht in der Radrotationsebene ist, zeigt, dass beim Ausführungsbeispiel drei Dehnungsmessstreifenpaare 10, 11 und 12 (DMS1, DMS3, DMS2)in Rotationsrichtung um 120° versetzt am sich drehenden Innenring 2 des Radlagers 5 angeordnet sind, wobei die beiden Dehnungsmessstreifen jedes Paars einen Winkel von 90° zueinander bilden.

Die Zeichnung zeigt nicht, dass die einzelnen Dehnungsmessstreifen jedes Paares 10, 11, 12 in Form einer Halbbrückenschaltung miteinander verbunden sind.

Zurück zu Figur 3A, in der durch die Abstände a und b angedeutet ist, dass die Befestigungsstellen jeweils der Radfelge 6 und der Bremsscheibe 3 in axialer Richtung um die Distanz a und in radialer Richtung um die Distanz b versetzt sind. Durch dieses sog. mechanische Offset-Konzept zwischen Felgen- und Bremsscheibenbefestigung wird erreicht, dass der Kraftfluss nicht direkt von der Radfelge 6 über die Bremsscheibe 3 verläuft.

In Figur 4 schließlich ist die Kräftebeziehung und das Gesamtgleichgewicht der am Radlager angreifenden Kräfte sowie die vom Bremsbelag ausgeübte Kraft darstellt.

Es ist zu erwähnen, dass es zweckmäßig sein kann, zusätzlich zu den in geringerem radialen Abstand angeordneten Dehnungsmessstreifenpaaren 10, 11, 12 bzw. 10a weitere Dehnungsmessstreifenpaare 10b in einem größeren radialen Abstand anzubringen, um eine Kompensation der bei der Raddrehung sich einstellenden Modulationen durch die Wälzkörper zu ermöglichen.

Weitere in Figur 3A und 3B nicht gezeigte Dehnungsmessstreifen können am feststehenden Außenring 1 des Radlagers 5 vorgesehen sein, z.B. um die Drehzahl und die Drehrichtung des Rades zu ermitteln.

## Patentansprüche

1. Messanordnung in einem Radlager (5) eines Kraftfahrzeugs zur Detektierung physikalischer Größen mittels an oder in mindestens einer der Lagerschalen (1,2) des Radlagers (5) angeordneten dehnungsempfindlichen Sensoren, **dadurch gekennzeichnet, dass** an dem sich mit dem Rad drehenden Innenring (2) des Radlagers (5) mindestens ein Dehnungsmessstreifenpaar (10, 11, 12) befestigt ist, dessen beide Dehnungsmessstreifen in der Rotationsebene des Rades gesehen gegenseitig um 90° versetzt angeordnet sind, und dass diese beiden Dehnungsmessstreifen des Paars (10, 11, 12) in einer Brückenschaltung so miteinander verbunden sind, dass deren Ausgangssignal nur auf Torsionsmomente in dem sich drehenden Radlagerflansch und nicht auf Biegekraftkomponenten reagiert.

2. Messanordnung nach Anspruch 1, **dadurch gekennzeichnet, dass** drei gegeneinander um jeweils etwa 120° in Drehrichtung des Radlagers winkelversetzte Paare (10, 11, 12) von Dehnungsmessstreifen am sich drehenden Innenring (2) vorgesehen sind.

3. Messanordnung nach Anspruch 1 oder 2, **dadurch gekennzeichnet, dass** die Messanordnung einen Telemetriesender am Innenring (2) und einen Telemetrieempfänger (13) am feststehen Radlageraußenring (1) aufweist, um das Ausgangssignal der Brückenschaltung bzw. Brückenschaltungen zu empfangen.

4. Messanordnung nach einem der Ansprüche 1 bis 3, **dadurch gekennzeichnet, dass** die Messanordnung zusätzlich zur Messung einer Radaufstandskraft (Fz), einer Bremsbeschleunigungskraft (Fx), einer Seitenführungskraft (Fy) und zwei Momenten entsprechend der Radaufstandskraft (Fz) und der Seitenführungskraft (Fy) eingerichtet ist.

5. Messanordnung nach einem der vorangehenden Ansprüche, **dadurch gekennzeichnet, dass** zusätzlich weitere Dehnungsmessstreifenpaare am feststehenden Außenring (1) des Radlagers (5) angebracht und wenigstens zur Ermittlung der Rad-Drehzahl und dessen Drehrichtung eingerichtet sind.

## Claims

1. Measuring arrangement in a wheel bearing (5) of a motor vehicle for detecting physical variables by means of strain-sensitive sensors which are arranged on or in at least one of the bearing shells (1, 2) of the wheel bearing (5), **characterized in that** at least one strain gauge pair (10, 11, 12) is fixed to the inner ring (2), which rotates with the wheel, of the wheel bearing (5), the two strain gauges of the said strain gauge pair being arranged offset by 90° in relation to one another as seen in the plane of rotation of the wheel, and **in that** these two strain gauges of the pair (10, 11, 12) are connected to one another in a bridge circuit such that their output signal reacts only to torsional moments in the rotating wheel bearing flange and not to bending force components.

2. Measuring arrangement according to Claim 1,
**characterized in that** three pairs (10, 11, 12) of strain gauges, which are angularly offset in relation to one another by in each case approximately 120° in the direction of rotation of the wheel bearing, are provided on the rotating inner ring (2).

3. Measuring arrangement according to Claim 1 or 2, **characterized in that** the measuring arrangement has a telemetry transmitter on the inner ring (2) and a telemetry receiver (13) on the stationary wheel bearing outer ring (1), in order to receive the output signal of the bridge circuit or bridge circuits.

4. Measuring arrangement according to one of Claims 1 to 3, **characterized in that** the measuring arrangement is additionally designed to measure a wheel contact force (Fz), a brake acceleration force (Fx), a lateral guidance force (Fy) and two torques corresponding to the wheel contact force (Fz) and the lateral guidance force (Fy).

5. Measuring arrangement according to one of the preceding claims, **characterized in that** further strain gauge pairs are additionally fitted to the stationary outer ring (1) of the wheel bearing (5) and designed at least to determine the wheel rotation speed and its direction of rotation.

## Revendications

1. Dispositif de mesure pour un palier de roue (5) d'un véhicule automobile, pour détecter des grandeurs physiques à l'aide de capteurs sensibles à la dilatation, installés sur ou dans au moins l'une des coquilles (1, 2) du palier de roue (5),
**caractérisé en ce que**
dans la bague intérieure (2) du palier de roue (5), tournant avec la roue, est fixée au moins une paire de jauges de contraintes (10, 11, 12) dont les deux jauges de dilatation sont décalées de 90° l'une par rapport à l'autre vues dans le plan de rotation de la roue et
ces deux jauges de contraintes de la paire (10, 11, 12) sont branchées suivant un montage en pont de façon que leur signal de sortie ne réagisse qu'en fonction du couple de torsion de la bride de palier de roue qui tourne et non en fonction des composantes de la force de flexion.

2. Dispositif de mesure selon la revendication 1,
**caractérisé par**
trois paires (10, 11, 12) de jauges de contraintes prévues sur la bague intérieure tournante (2), ces paires étant décalées angulairement l'une par rapport à l'autre chaque fois d'environ (120°) dans le sens de rotation du palier de roue.

3. Dispositif de mesure selon la revendication 1 ou 2,
**caractérisé en ce qu'**
il comporte un émetteur de télémétrie sur la bague intérieure (2) et un récepteur de télémétrie (13) sur la bague fixe extérieure (1) du palier de roue pour recevoir le signal de sortie du montage en pont ou des circuits en pont.

4. Dispositif de mesure selon l'une des revendications 1 à 3,
**caractérisé en ce qu'**
en plus de la mesure de la force d'appui de roue (Fz) il est conçu pour mesurer une force d'accélération de frein (Fx), une force de guidage latéral (Fy) et deux couples correspondant à la force d'appui de roue (Fz) et à la force de guidage latéral (Fy).

5. Dispositif de mesure selon l'une des revendications précédentes,
**caractérisé par**
d'autre paires de jauges de contraintes, supplémentaires, installées sur la bague extérieure fixe (1) du palier de roue (5) et prévues au moins pour déterminer la vitesse de rotation de roue et son sens de rotation.
